# EUROPÄISCHE PATENTSCHRIFT

(11) **EP 3 838 668 B1**
(45) Veröffentlichungstag und Bekanntmachung des Hinweises auf die Patenterteilung: **06.09.2023**
(21) Anmeldenummer: 20211858.4
(22) Anmeldetag: 04.12.2020
(51) Int. Cl.: B60P 3/39

(54) **MOBILER UMBAUTER RAUM**
MOBILE ENCLOSED SPACE
ESPACE CLOS MOBILE

(30) Priorität: 16.12.2019 DE 102019134494
(43) Veröffentlichungstag der Anmeldung: 23.06.2021
(73) Patentinhaber: König, Reinhold, 72818 Trochtelfingen (DE)
(72) Erfinder: König, Reinhold, 72818 Trochtelfingen (DE)
(74) Vertreter: Mammel und Maser Patentanwälte PartG mbB

(56) Entgegenhaltungen:
- BE-A3- 1 001 411
- DE-A1-102007 000 033
- DE-A1-102016 118 322
- FR-A1- 2 442 929
- US-A- 3 719 386
- US-A1- 2017 350 114

## Beschreibung

Die Erfindung betrifft einen mobilen umbauten Raum mit einem einen Basisraum definierenden Grundmodul und einem dazu ausfahrbaren Zusatzraumelement.

Aus der DE 10 2016 118 322 A1 und der BE 1 001 411 A3 ist ein mobiler umbauter Raum, wie beispielsweise ein Wohnwagen, ein Wohnmobil oder ein Container bekannt. Dieser mobile umbaute Raum umfasst ein Grundmodul mit einem Basisraum, wobei das Grundmodul eine Bodenplatte, Seitenwände und ein Dach umfasst. An dem Grundmodul ist eine Klappwand vorgesehen, die eine Zusatzbodenplatte umfasst. Ein Zusatzraumelement mit einem Dach und Seitenwänden ist in einer Raumerweiterungsstellung auf der Zusatzbodenplatte positioniert. Zum Ausfahren des Zusatzraumelementes gegenüber dem Grundmodul sind an dem Zusatzraumelement Laufrollen und an der Klappwand Laufschienen vorgesehen, so dass das Zusatzraumelement auf die Klappwand aufverschiebbar ist. Dadurch kann das Zusatzraumelement gegenüber dem Grundmodul verfahren werden, um einen Zusatzraum zum mobilen umbauten Raum des Grundmoduls zu bilden. BE 1 001 411 A3 offenbart ein mobiler umbauter Raum gemäß dem Oberbegriff des Anspruchs 1.

Aus der FR 2 442 929 A1 ist eine mehrteilige Überdachung bekannt, bei der die einzelnen Überdachungselemente entlang von Schienen ausfahrbar sind. Hierfür sind Führungsschlitten vorgesehen. Der Führungsschlitten umfasst einen Wagen mit zwei Laufrollen mit einer horizontalen Achse. Auf dem Wagen ist eine weitere Halterung aufsteckbar, welche eine Laufrolle aufnimmt, die um eine vertikale Achse drehbar ist.

Der Erfindung liegt die Aufgabe zugrunde, einen mobilen umbauten Raum vorzuschlagen, bei welchem ein vereinfachtes Überführen des Grundmoduls oder des Zusatzraumelementes in eine ausgefahrene Position für ein vergrößertes Raumvolumen ermöglicht wird.

Diese Aufgabe wird durch einen mobilen umbauten Raum gemäß den Merkmalen des Anspruchs 1 gelöst. Dadurch wird ermöglicht, dass während der Verfahrbewegung des Zusatzraumelementes oder des Grundmoduls auf die ausgekannte Klappwand eine verkippungsfreie Führung erfolgt, so dass eine Person mit geringem Kraftaufwand den mobilen umbauten Raum aus einer Transportposition in eine Gebrauchsposition überführbar ist, indem das Grundmodul und das Zusatzraumelement in einer ausgezogenen Position zueinander vorgesehen sind.

Eine bevorzugte Ausführungsform des mobilen umbauten Raum sieht vor, dass zwischen zwei Führungsrollen, die um die vertikale Achse drehbar sind, zumindest zwei Laufrollen positioniert sind, die um die horizontale Achse drehbar gelagert sind. Dies ermöglicht, dass ein seitliches Verkippen oder Verdrehen, insbesondere ein Verkanten des Führungsschlittens zur Laufschiene während der Ausfahrbewegung des Zusatzraumelementes oder des Grundmoduls verhindert wird.

Des Weiteren ist bevorzugt vorgesehen, dass die Laufschiene einteilig als eine Profilschiene ausgebildet ist oder mehrteilig aus einzelnen Profil- bzw. Führungsabschnitten zusammengesetzt ist. Bei der einteilig ausgeführten Profilschiene ist eine einfache Montage ermöglicht. Bei der mehrteilig aus gebildeten Profilschiene zur Bildung der Laufschienen kann vorgesehen sein, dass einzelne Abschnitte des Grundmoduls oder des Zusatzraumelementes ein Teil der Laufschiene bilden können.

Die Führung umfasst vorteilhafter Weise Laufschienen, welche stirnseitig an die Bodenplatte des Grundmoduls anschließen und Laufschienen, die stirnseitig an die Klappwand anschließen, wobei zumindest ein Führungsabschnitt bündig oder vertieft gegenüber der Oberseite der Bodenplatte des Grundmoduls und der Oberseite der Klappwand vorgesehen ist. Dies ermöglicht, dass die Seitenwände des Grundmoduls als auch die Seitenwände des Zusatzraumelementes jeweils bündig zur Bodenplatte und Oberseite der Klappwand positioniert sind, um eine dichte Anordnung sowohl in der Transportposition als auch Gebrauchsposition zu schaffen.

Vorteilhafterweise ist vorgesehen, dass ein Abstand zwischen dem stirnseitigen Ende der Laufschienen der Bodenplatte und dem stirnseitigen Ende der Laufschiene an der Klappwand kleiner als der Abstand zwischen zwei Laufrollen mit horizontaler Achse an dem Führungsschlitten vorgesehen ist. Dieser ermöglicht ein sicheres Überfahren der Stoßstelle zwischen der Laufschiene an der Bodenplatte einerseits und der Laufschiene an der Klappwand andererseits. Dadurch wird auch ein Überfahren ermöglicht, ohne dass die Laufrollen sich in dem Spalt zwischen den zwei aneinander angrenzenden Laufschienen verhakt.

Eine bevorzugte Ausführungsform der Führung sieht vor, dass der Führungsschlitten einen Grundkörper aus einem mehrfach abgekanteten Profilelement aufweist, wobei ein Befestigungsabschnitt des Profilelementes zur Anbindung an der Seitenwand des Zusatzraumelementes oder an der Seitenwand des Grundmoduls in einer vertikalen Ebene liegt, welche innerhalb der Lauffläche der Laufrollen mit horizontaler Achse verläuft. Dadurch kann ein optimaler Lastabtrag erfolgen, so dass bei der Aus- und Einfahrbewegung des Zusatzraumelementes oder des Grundmoduls ein zusätzliches Verwinden der jeweiligen Seitenwände verhindert wird.

Eine weitere vorteilhafte Ausgestaltung der Erfindung sieht vor, dass an einer Außenseite der Seitenwand des Zusatzraumelementes oder des Grundmoduls eine Blende vorgesehen ist, welche sich zumindest entlang des ersten und zweiten Führungsabschnitts der Laufschiene an der Bodenplatte erstreckt, und dass an einer Außenseite der Klappwand eine Blende vorgesehen ist und zwischen der Laufschiene der Klappwand und der dieser zugeordneten Blende die Blende des Zusatzraumelementes oder des Grundmoduls im ausgefahrenen Zustand anordenbar ist. Dies ermöglicht, dass sowohl in der Transportposition des Zusatzraumelementes zum Grundmodul als auch in der Gebrauchsposition des Zusatzraumelementes zum Grundmodul die Führung durch die zumindest eine Blende geschützt ist. Dadurch wird ein sogenanntes Labyrinth gebildet. Dies ermöglicht eine Verringerung der Verschmutzungsgefahr als auch der Verletzungsgefahr. Zudem kann ein Schutz gegen Zugluft gegeben sein.

Eine weitere vorteilhafte Ausgestaltung des mobilen umbauten Raum sieht vor, dass an einer Außenseite der Seitenwand des Grundmoduls, vorzugsweise nahe oder an einem Eckbereich zwischen der Seitenwand und dem Dach angrenzend eine Gleitschiene oder eine Gleitfläche vorgesehen ist, an der sich zumindest ein Gleitelement abstützt, welches an einer Innenseite der Seitenwand des Zusatzraumelementes oder an einem Rahmen des Zusatzraumelementes vorgesehen ist. Diese Anordnung ermöglicht, dass eine Art "Vier-Punkt-Führung" des Grundmoduls oder des Zusatzraumelementes zum Überführen aus der Transportposition in die Gebrauchsposition ermöglicht ist. Zum einen ist die Führung im Bereich der Bodenplatte bzw. der Klappwand vorgesehen. Zum anderen ist die zusätzliche Führung durch die Gleitschiene und das zumindest eine Gleitelement nahe oder im oberen Eckbereich an der Seitenwand des Grundmoduls oder des Zusatzraumelementes vorgesehen, so dass während der Ausfahrtbewegung einem seitlichen Verkippen oder Verkanten des Zusatzraumelementes zum Grundmodul oder umgekehrt entgegengewirkt werden kann.

Bevorzugt ist vorgesehen, dass das Gleitelement aus Kunststoff ausgebildet ist. Dadurch kann eine kostengünstige Führung geschaffen werden. Zudem sind solche Führungen auch verschleißarm.

Eine bevorzugte Ausführungsform des mobilen umbauten Raum sieht vor, dass das Zusatzraumelement zum Grundmodul durch wenigstens zwei Schlitten an jeder Seitenwand des Zusatzraumelementes und durch zumindest ein zwischen der Seitenwand des Zusatzraumelementes und der Seitenwand des Grundmoduls nahe oder an das Dach des Grundmoduls angrenzend durch das Gleitelement verschiebbar geführt ist. Bei dieser Ausführungsform ist das Zusatzraumelement gegenüber dem Grundmodul verschiebbar angeordnet. Insbesondere umgreift das Zusatzraumelement das Grundmodul. Durch die bevorzugte Ausgestaltung der Führung kann eine leicht gängige, sichere und einfache Ein- und Ausfahrbewegung des Zusatzraumelementes zum Grundmodul ermöglicht sein.

An dem Zusatzraumelement, welches gegenüber dem Grundmodul ausziehbar ist, kann bevorzugt an einer Unterseite zur Bodenplatte oder zur Zusatzbodenplatte weisend zumindest abschnittsweise ein flexibles Abdichtungselement vorgesehen sein, welches auf der Bodenplatte oder der Zusatzbodenplatte aufsteht oder aufliegt. Dadurch wird eine Abdichtung zwischen der Bodenplatte beziehungsweise Zusatzbodenplatte und dem Zusatzraumelement ermöglicht, wobei gleichzeitig die Aus- und Einfahrbewegung des Zusatzraumelementes gegenüber dem Grundmodul aufrechterhalten bleibt.

Insbesondere ist an der Unterseite der Seitenwand oder einer die Unterseite der Seitenwand abschließenden Leiste das zumindest eine flexible Abdichtungselement befestigbar. Dadurch kann bei einem Verschleiß ein solches Abdichtelement auch ausgetauscht werden. Insbesondere erstreckt sich dieses flexible Abdichtelement entlang der Unterseite der drei Seitenwände des Zusatzraumelementes. Vorteilhafterweise ist das flexible Abdichtungselement als eine Abdichtungslippe, beispielsweise in Form einer dickeren Folie, einer Bürstenleiste oder dergleichen, ausgebildet.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht eines mobilen umbauten Raumes in einer Transportposition,
Figur 2 eine perspektivische Ansicht des mobilen umbauten Raumes in einer Gebrauchsposition,
Figur 3 eine perspektivische Detailansicht des mobilen umbauten Raumes mit einer umgeklappten Klappwand,
Figur 4 eine perspektivische Ansicht eines Zusatzraumelementes des mobilen umbauten Raumes in einer Gebrauchsposition,
Figur 5 eine perspektivische Ansicht der Führung des Zusatzraumelementes mit umgeklappter Klappwand,
Figur 6 eine perspektivische Ansicht der Führung mit dem Zusatzraumelement in einer Gebrauchsposition,
Figur 7 eine perspektivisch vergrößerte Ansicht der Führung gemäß Figur 5,
Figur 8 eine perspektivische Ansicht eines Führungsschlittens der Führung gemäß Figur 5,
Figur 9 eine perspektivische Ansicht des mobilen umbauten Raumes in einer Gebrauchsposition mit der Führung und mit einem Gleitelement, und
Figur 10 eine perspektivische Ansicht des Zusatzraumelementes mit Gleitelementen.

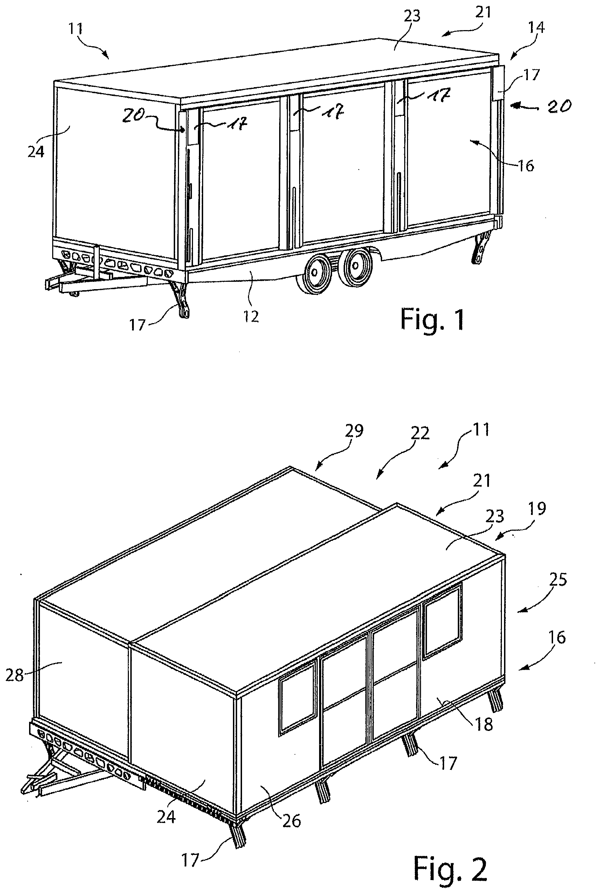

In Figur 1 ist eine perspektivische Ansicht eines mobilen umbauten Raumes 11 dargestellt. Dieser mobile umbaute Raum 11 ist auf einem Träger 12 oder einer Plattform vorgesehen. Im Ausführungsbeispiel ist der Träger 12 als ein Fahrwerk für einen Anhänger ausgebildet, an welchem Transporträder sowie eine Deichsel gesehen sind.

In Figur 1 ist der mobile umbaute Raum 11 in einer Transportposition 14 dargestellt. Eine an dem mobilen umbauten Raum 1 vorgesehene Klappwand 16 ist hochgeklappt und vertikal ausgerichtet.

An der Außenseite der Klappwand 16 sind Stützfüße 17 vorgesehen, die in einer eingeklagten Position bündig zur Klappwand 16 positioniert sind.

Die Klappwand 16 ist durch eine lösbare Verriegelung 20 in der hochgeklappten Position gesichert. Vor dem Herunterklappen der Klappwand 16 werden die an der Klappwand 16 vorgesehenen Stützfüße 17 ausgefahren.

An dem Träger 12 sind untere Stützfüße 17 vorgesehen, um den mobilen umbauten Raum 11 für den Gebrauch auf dem Untergrund abzustützen.

In Figur 2 ist eine perspektivische Ansicht des mobilen umbauten Raumes 11 in einer Gebrauchsposition 19 dargestellt. Zum Überführen des mobilen umbauten Raumes 11 in diese Gebrauchsposition 19 werden zunächst die Stützfüße 17 gegenüber der Klappwand 16 ausgeklappt. Darauffolgend wird die Klappwand 16 heruntergeklappt, so dass diese in eine horizontale Position übergeführt wird. Darauffolgend kann ein Zusatzraumelement 21 aus der Transportposition 14 gemäß Figur 1 in die Gebrauchsposition 19 gemäß Figur 2 durch eine Verfahrbewegung übergeführt werden. Das Zusatzraumelement 21 wird gegenüber einem Grundmodul 22 ausgefahren. Das Grundmodul 22 umfasst einen Basisraum. Durch das Zusatzraumelement 21 in der Gebrauchsposition wird der Basisraum durch einen Zusatzraum des Zusatzraumelementes 21 erweitert.

Alternativ zum dargestellten Ausführungsbeispiel kann auch eine Vertauschung vorgesehen sein, dass nämlich das Zusatzraumelement 21 fest am Träger 12 vorgesehen ist und das Grundmodul 22 gegenüber der Klappwand 16 ausfahrbar ist. Bevorzugt umgreift das Zusatzraumelement 21 die stirnseitigen Seitenwände 28, 29 und das Dach 31 des Grundmoduls 22. Alternativ können die Seitenwände 24, 25 und das Dach 23 des Zusatzraumelementes 21 auch innerhalb des Grundmoduls 22 verfahrbar sein.

Das Zusatzraumelement 21 umfasst zwei stirnseitige Seitenwände 24, 25 sowie eine dazwischen angeordnete Längsseitenwand 26. In der oder den Seitenwänden 24, 25, 26 können Fenster, Türen oder dergleichen vorgesehen sein.

Auf dem Träger 12 ist das Grundmodul 22 vorzugsweise fest vorgesehen. Das Grundmodul 22 umfasst eine Bodenplatte 27 auf dem Träger 12 sowie zwei stirnseitige Seitenwände 28, 29 und eine weitere Längsseitenwand 31, die fest mit der Bodenplatte 27 verbunden sind.

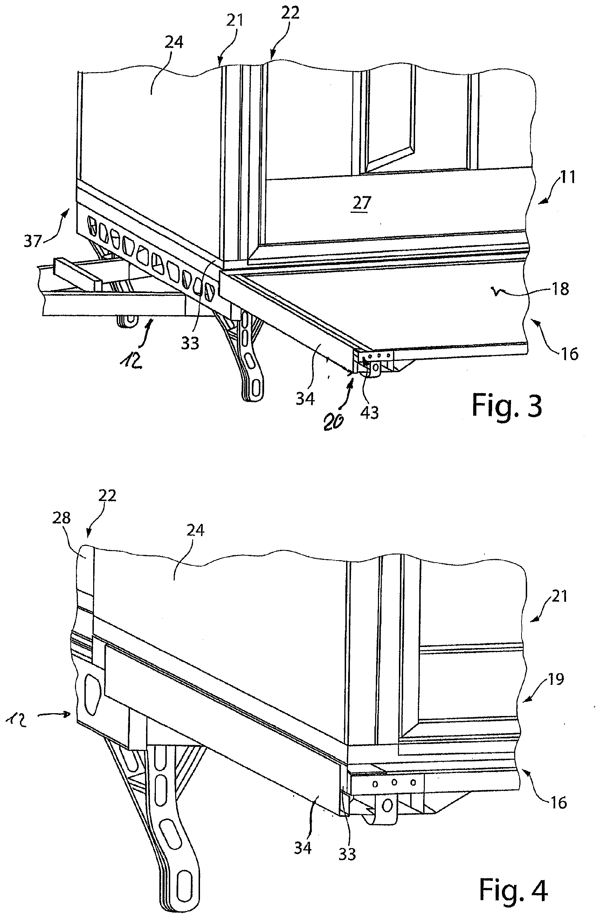

Die Figur 3 zeigt eine perspektivisch vergrößerte Ansicht des Zusatzraumelementes 21 zum Grundmodul 22 in der Transportposition 14, wobei die Klappwand 16 abgeklappt ist. Die Figur 4 zeigt eine perspektivisch vergrößerte Ansicht des Zusatzraumelementes 21 in der Gebrauchsposition 19, in der das Zusatzraumelement 21 auf der Klappwand 16 positioniert ist. An jeder stirnseitigen Seitenwand 24, 25 ist eine Blende 33 vorgesehen, welche sich gegenüber der Bodenplatte 27 nach unten erstreckt. Dadurch ist eine hinter der Blende 33 liegende Führung 37 geschützt. Die Klappwand 16 weist am stirnseitigen Ende ebenfalls eine Blende 34 auf. Diese Blende 34 ist mit Abstand zur Laufschiene 43 einer Führung 37 an der Klappwand 16 positioniert. Dadurch kann in der Gebrauchsposition 19 des Zusatzraumelementes 21 zur Klappwand 16 die Blende 33 des Zusatzraumelementes 21 zwischen der Blende 34 der Klappwand 16 und der Zusatzbodenplatte 18 positioniert sein. Dies ermöglicht einen zusätzlichen Schutz gegen Feuchtigkeit und Zugluft.

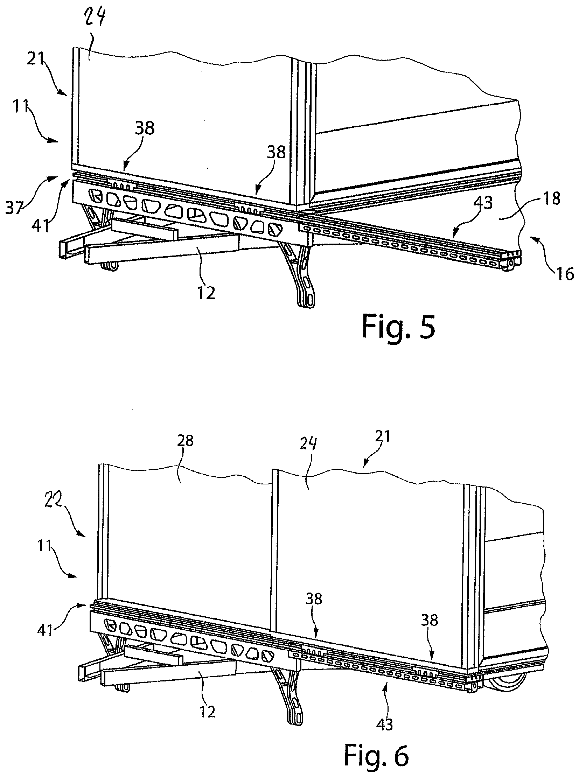

In Figur 5 ist perspektivisch eine vergrößerte Ansicht der Führung 37 zwischen dem Zusatzraumelement 21 und dem Grundmodul 22 mit einer abgenommenen Blende 33, 34 in der Transportposition 14 dargestellt. Die Figur 6 zeigt eine perspektivische Ansicht der Führung 37 bei abgenommener Blende 33, 34 in der Gebrauchsposition 19 des Zusatzraumelementes 21 zum Grundmodul 22. An der stirnseitigen Seitenwand 24, 25 des Zusatzraumelementes 21 sind bevorzugt zwei mit Abstand zueinander angeordnete Führungsschlitten 38 vorgesehen. Diese Führungsschlitten 28 sind in einer an der Bodenplatte 27 angeordneten Laufschiene 41 und in einer an der Klappwand vorgesehenen Laufschiene 43 geführt. Durch die Anordnung der wenigstens zwei Führungsschlitten 38 kann eine verbesserte Führung des Zusatzraumelementes 21 während einer Verfahrbewegung aus der Transportposition 14 in die Gebrauchsposition 19 ermöglicht sein.

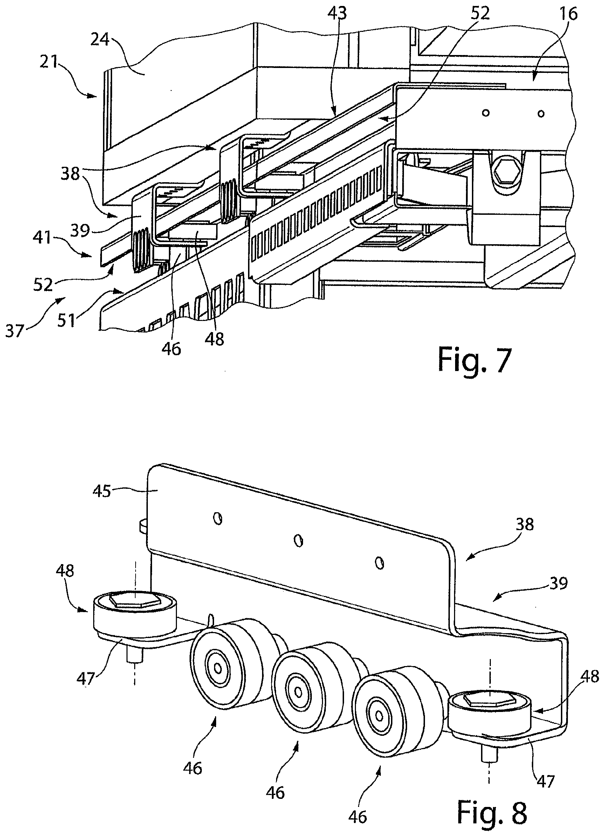

In Figur 7 ist schematisch vergrößert eine Ansicht auf die Führung 37 dargestellt. Die Figur 8 zeigt perspektivisch den Führungsschlitten 38 der Führung 37. Der Führungsschlitten 38 umfasst einen Grundkörper 39, der beispielsweise durch ein mehrfach abgekantetes Blech ausgebildet ist. An dem Grundkörper 39 ist ein Befestigungsabschnitt 45 vorgesehen. Daran schließt sich eine U-förmige Profilierung an. Dem Befestigungsabschnitt 45 gegenüberliegend sind zumindest zwei Laufrollen 46 mit einer horizontal ausgerichteten Achse vorgesehen. Des Weiteren umfasst der Grundkörper 39 Aufnahmelaschen 47, an welchen zumindest jeweils eine Laufrolle 48 aufgenommen ist, welche um eine vertikale Achse drehbar sind. Bevorzugt sind zwischen den wenigstens zwei Laufrollen 48 mit der vertikalen Achse zumindest zwei Laufrollen 46 mit der horizontal ausgerichteten Achse angeordnet. Eine vertikale Ebene, welche sich durch den Befestigungsabschnitt 45 erstreckt, liegt innerhalb der Breite der Lauffläche der Laufrollen 46 mit horizontaler Achse. Dadurch kann ein guter Lastabtrag von den Seitenwänden 24, 25 auf die Laufrollen 46 des Zusatzraumelementes 21 ermöglicht sein.

Die U-förmige Profilierung des Grundkörpers 39 weist den Vorteil auf, dass die Laufschiene 41, 43 umgriffen werden kann, um die Laufrollen 46, 48 in den Laufschienen 41, 43 zu führen. Die Laufschiene 41, 43 umfasst eine horizontal ausgerichtete Lauffläche 51, welche parallel zur Bodenplatte 22 oder zur Zusatzbodenklappe 18 der Klappwand 16 ausgerichtet ist. Mit Abstand zur Lauffläche ist ein C-förmlicher Führungsabschnitt 52 an der Laufschiene 41, 43 ausgebildet. In diesem C-förmigen Führungsabschnitt 52 werden die Laufrollen 48 mit vertikaler Achse geführt. Dadurch können die Führungsschlitten 38 parallel zur jeweiligen Stirnseite der Bodenplatte 27 und der Zusatzbodenplatte 18 der Klappwand 16 verfahrbar geführt werden.

Der Abstand zwischen zwei benachbarten Laufrollen 46 mit horizontal ausgerichteter Achse an dem Führungsschlitten 38 ist größer als ein Spalt zwischen der fest an der Bodenplatte 27 angeordneten Laufschiene 41 und der fest an der Klappwand 16 angeordneten Laufschiene 43. Dadurch kann ein gesichertes Überfahren ermöglicht sein. Dies weist auch den Vorteil auf, dass die Laufschiene 43 an der Klappwand 16 in einer aufgeklappten Position der Klappwand 16 nicht bündig an einem stirnseitigen Ende der Laufschiene 41 anliegen muss, wodurch die Herstellung vereinfacht ist.

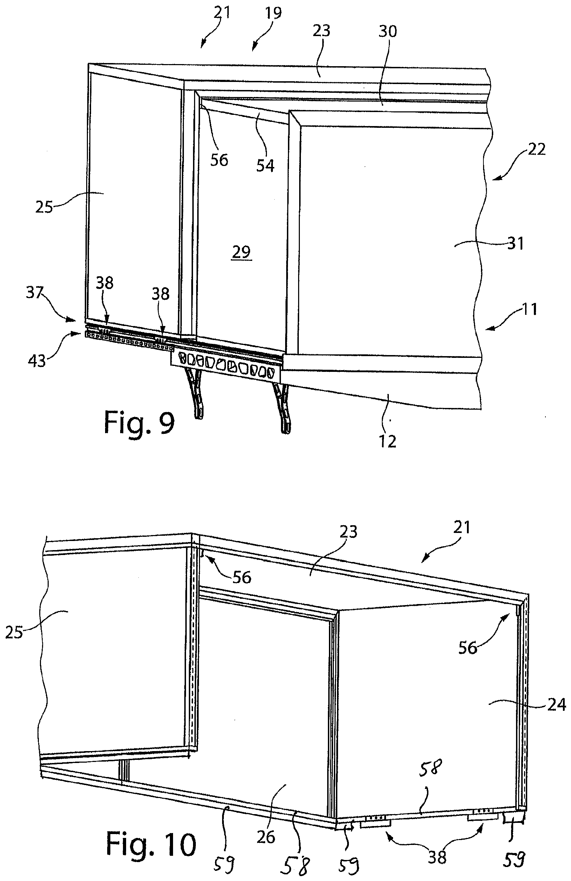

In Figur 9 ist perspektivisch der umbaute mobile Raum 11 in der Gebrauchsposition 19 dargestellt. Die Seitenwände 24, 25 des Zusatzraumelementes 21 stützen sich über die Führungsschlitten 38 an der Laufschiene 43 auf der Klappwand 16 ab. Des Weiteren ist bevorzugt vorgesehen, dass an der stirnseitigen Seitenwand 28, 29 des Grundmoduls 22, insbesondere nahe oder an dem Dach 23 angrenzend, eine Gleitschiene 54 oder ein Führungselement oder eine Gleitfläche vorgesehen ist. Diese Gleitschiene 54 erstreckt sich bevorzugt die gesamte Breite der stirnseitigen Seitenwand 28, 29 des Grundmoduls 22.

Das Zusatzraumelement 21 weist an einer Innenseite der stirnseitigen Seitenwand 24, 25 ein Gleitelement 56 auf, welches der Gleitschiene 54 gegenüberliegend an dem Zusatzraumelement 21 positioniert ist. Dieses Gleitelement 56 kann auch an einem Rahmen des Zusatzraumelementes 51 vorgesehen sein, der an einer Innenseite der Seitenwände 24, 25 sowie an einer Unterseite des Daches 23 sich am Zusatzraumelement 21 erstreckt.

Die stirnseitige Seitenwand 24, 25 und das Dach 23 sind bevorzugt über einem Eckwinkelprofil, insbesondere aus Aluminium, zueinander fixiert. Der die Seitenwand 24, 25 übergreifende Schenkel des Eckwinkelprofils kann die Gleitschiene 54 bilden.

Die Figur 10 zeigt perspektivisch das Zusatzraumelement 21 mit den im oberen Bereich an der Innenseite der Seitenwände 24, 25 oder eines entsprechenden Rahmens angeordneten Gleitelemente 56.

Durch die Führungsschlitten 38, welche mit den Laufschienen 41, 43 zusammenwirken und den Gleitelementen 56, welche mit den Gleitschienen 54 zusammenwirken, kann an das Zusatzraumelement 21 verbindungssteif während einer Verfahrbewegung von der Transportposition 14 in die Gebrauchsposition 19 und wieder zurückgeführt werden. Dadurch reduziert sich der Kraftaufwand, um das Zusatzraumelement 21 relativ zum Grundmodul 22 zu verschieben. Durch diese Ausgestaltung ist eine Mehrfachführung des Zusatzraumelementes 21 zum Grundmodul ausgebildet. Diese Mehrfachführung ist auch bei einer Ausführungsform möglich, bei der das Grundmodul 22 zum Zusatzraumelement 21 auffahrbar ist.

An einer Unterseite der Seitenwände 24, 25, 26 oder an einer die Unterseite der Seitenwände 24, 25, 26 begrenzenden Leiste 58 ist bevorzugt zumindest ein flexibles Abdichtelement 59 vorgesehen. Dieses flexible Abdichtungselement 59 erstreckt sich vorteilhafterweise entlang der gesamten Länge der Unterseite 24, 25, 26. Das Abdichtelement 59 kann auf der Innen- und/oder Außenseite an der Unterseite der Seitenwände 24, 25, 26 angeordnet sein. Auch kann alternativ an einer unteren Stirnseite der Seitenwände 24, 25, 26 ein solches flexibles Abdichtelement 59 angeordnet sein. Gemäß einer bevorzugten Ausführungsform kann das flexible Abdichtelement 59 als eine Abdichtungslippe ausgebildet sein, wodurch die Ein- und Ausziehbewegung des Zusatzraumelementes 21 weiterhin ermöglicht bleibt. Gleiches gilt für eine weitere alternative Ausgestaltung des Abdichtelementes 59, welches in Form einer Bürstenleiste ausgebildet sein kann.

## Patentansprüche

1. Mobiler umbauter Raum (11), vorzugsweise ein Wohnwagen, Verkaufs-und/oder Ausstellungsanhänger, Wohnmobile oder Container
- mit einem einen Basisraum definierenden Grundmodul (22), wobei das Grundmodul (22) eine Bodenplatte (27), stirnseitige Seitenwände (28, 29) und ein Dach (30) umfasst,
- mit wenigstens einer dem mobilen umbauten Raum (11) zugeordneten Klappwand (16), die eine Zusatzbodenplatte (18) umfasst und umklappbar ist, und
- mit wenigstens einem ein Dach (30), stirnseitige Seitenwände (28, 29) und eine Längsseite (31) umfassenden Zusatzraumelement (21), das in einer Gebrauchsposition (19) mit der umgeklappten Klappwand (16) einen den Basisraum erweiterten Zusatzraum bildet,
- wobei zwischen dem Zusatzraumelement (21) und der Klappwand (16) zum Aufschieben des Zusatzraumelementes (21) auf die Klappwand (16) in dem umgeklappten Zustand eine Führung (37) aus Laufrollen (46) und Laufschienen (41) vorgesehen ist,
- wobei die Führung (37) zumindest einen Führungsschlitten (38) mit Laufrollen (46, 48) aufweist, und
- wobei die Führung (37) Laufschienen (41, 43) umfasst, welche einen ersten Führungsabschnitt (49) aufweisen, auf dem die Laufrollen (46) mit einer horizontalen Achse abrollbar sind und einen zweiten Führungsabschnitt (52) aufweisen, entlang dem Laufrollen (48) mit einer vertikalen Achse geführt sind und die Verfahrensbewegung des zumindest einen Führungsschlittens (38) zum ersten Führungsabschnitt (49) ausgerichtet ist,
**dadurch gekennzeichnet,**
- **dass** der Führungsschlitten (38) einen Grundkörper (39) aufweist, an dem ein Befestigungsabschnitt (45) vorgesehen ist, woran sich einer U-förmige Profilierung anschließt, und
- **dass** dem Befestigungsabschnitt gegenüberliegend an dem Grundkörper (39) wenigstens zwei Laufrollen (46) um eine horizontale Achse und an Aufnahmelaschen (47) des Grundkörpers (39) wenigstens zwei Laufrollen (48) um eine vertikale Achse drehbar gelagert sind.

2. Mobiler umbauter Raum nach Anspruch 1, **dadurch gekennzeichnet, dass** zwischen zwei Laufrollen (48), die um die vertikale Achse drehbar sind, zumindest zwei Laufrollen (46) an dem Führungsschlitten (38) vorgesehen sind, die um die horizontale Achse drehbar gelagert sind.

3. Mobiler umbauter Raum nach Anspruch 1 oder 2, **dadurch gekennzeichnet, dass** die Laufschiene (41, 43) einteilig als Profilschiene ausgebildet ist oder mehrteilig aus den Führungsabschnitten (49, 52) zusammengesetzt ist.

4. Mobiler umbauter Raum nach einem der vorhergehenden Ansprüche, **dadurch gekennzeichnet, dass** die Laufschiene (41) seitlich an die Bodenplatte (27) des Grundmoduls (22) anschließend und die Laufschiene (43) stirnseitig an die Klappwand (16) anschließend vorgesehen ist, wobei zumindest ein Führungsabschnitt (49, 52) bündig oder vertieft gegenüber der Oberseite der Bodenplatte (27) des Grundmoduls (22) und der Oberseite der Klappwand (16) vorgesehen ist.

5. Mobiler umbauter Raum nach einem der vorhergehenden Ansprüche, **dadurch gekennzeichnet, dass** der Abstand zwischen einem stirnseitigen Ende der Laufschiene (41) an der Bodenplatte (27) und dem gegenüberliegenden stirnseitigen Ende der Laufschiene (43) an der Klappwand (16) kleiner als ein Abstand zwischen zwei Laufrollen (46) mit horizontal ausgerichteter Achse an dem Führungsschlitten (38) ist.

6. Mobiler umbauter Raum nach einem der vorhergehenden Ansprüche, **dadurch gekennzeichnet, dass** der Führungsschlitten (38) einen Grundkörper (39) mit einem mehrfach abgekanteten Profilelement aufweist, wobei ein Befestigungsabschnitt (45) zur Anbindung an dem Zusatzraumelement (21) oder dem Grundmodul (22) in einer vertikalen Achse liegt, welche innerhalb der Lauffläche der Laufrollen (46) mit horizontaler Achse liegt.

7. Mobiler umbauter Raum nach einem der vorhergehenden Ansprüche, **dadurch gekennzeichnet, dass** an einer Außenseite der stirnseitigen Seitenwand (28, 29) des Zusatzraumelementes (21) eine Blende (33) vorgesehen ist, welche sich zumindest entlang des ersten und zweiten Führungsabschnittes (49, 52) der Laufschiene (41) der Bodenplatte (27) erstreckt und an einer Außenseite der Klappwand (16) eine Blende (34) vorgesehen ist, die mit Abstand zur Führungsschiene (43) der Klappwand (16) angeordnet ist, so dass die Blende (33) des Zusatzraumelementes (21) zwischen der Blende (34) und der Laufschiene (43) der Klappwand (16) positioniert ist.

8. Mobiler umbauter Raum einem der vorhergehenden Ansprüche, **dadurch gekennzeichnet, dass** an der Außenseite der stirnseitigen Seitenwand (28, 29) des Grundmoduls (22), vorzugsweise nahe oder an einem Eckbereich zwischen der Seitenwand (28, 29) und dem Dach (30) angrenzend eine Gleitschiene (54) vorgesehen ist, an der sich zumindest ein Gleitelement (56) abstützt, welches an einer Innenseite der stirnseitigen Seitenwand (24, 25) des Zusatzraumelementes (21) oder eines Rahmens des Zusatzraumelementes (21) vorgesehen ist.

9. Mobiler umbauter Raum nach Anspruch 8, **dadurch gekennzeichnet, dass** das Gleitelement (56) aus Kunststoff ausgebildet ist.

10. Mobiler umbauter Raum nach einem der Ansprüche 8 oder 9, **dadurch gekennzeichnet, dass** das Zusatzraumelement (21) zum Grundmodul (22) durch wenigstens zwei an dem Zusatzraumelement (21) eingefügten Führungsschlitten (38), die vorzugsweise an jeder Seitenwand (24, 25) des Zusatzraumelementes (21) befestigt sind und durch zumindest ein zwischen der Seitenwand (24, 25) des Zusatzraumelementes (21) und der Seitenwand (28, 29) des Grundmoduls (22) angeordneten Gleitelements (56) verschiebbar geführt ist.

11. Mobiler umbauter Raum nach einem der vorhergehenden Ansprüche, **dadurch gekennzeichnet, dass** das Zusatzraumelement (21) an einer Unterseite zur Bodenplatte (27) oder zur Zusatzbodenplatte (18) weisend zumindest abschnittsweise ein flexibles Abdichtelement (59) aufweist, welches auf der Bodenplatte (28) oder Zusatzbodenplatte (21) aufliegt.

12. Mobiler umbauter Raum nach Anspruch 11, **dadurch gekennzeichnet, dass** an einer Unterseite der Seitenwände (24, 25, 26) oder an einer die Unterseite der Seitenwände (24, 25, 26) abschließenden Leiste (59) das zumindest eine flexible Abdichtelement (59) befestigbar ist, welches vorzugsweise als eine Abdichtungslippe oder eine Bürstenleiste ausgebildet ist.

## Claims

1. A mobile enclosed space (11), preferably a caravan, sales and/or exhibition trailer, motor home or container,
- including a base module (22) which defines a base space, said base module (22) comprising a floor plate (27), frontal side walls (28, 29), and a roof (30),
- including at least one hinge wall (16) which is associated with said mobile enclosed space (11), comprises an expansion floor plate (18), and may be folded down, and
- including at least one expansion space element (21) which comprises a roof (30), frontal side walls (28, 29), and a longitudinal face (31), and which, when in a use position (19) and in conjunction with the folded-down hinge wall (16), forms an expansion space extending the base space,
- wherein a guide mechanism (37) consisting of rollers (46) and running rails (41) is provided between the expansion space element (21) and the hinge wall (16) for sliding the expansion space element (21) onto the hinge wall (16) when the latter is in its folded-down condition,
- wherein the guide mechanism (37) has at least one guide carriage (38) including rollers (46, 48), and
- wherein the guide mechanism (37) comprises running rails (41, 43) which have a first guide portion (49) on which the rollers (46) having a horizontal axis may roll and a second guide portion (52) along which rollers (48) having a vertical axis are guided, and wherein the movement of displacement of said at least one guide carriage (38) is oriented with respect to the first guide portion (49), **characterised in that**
- the guide carriage (38) has a main body (39) on which a fastening portion (45) is provided, followed by a U-shaped profile, and
- at least two rollers (46) are rotatably mounted around horizontal axes provided opposite to the fastening portion on the main body (39), and at least two rollers (48) are rotatably mounted around vertical axes provided on attaching straps (47) of the main body (39).

2. The mobile enclosed space as claimed in claim 1, **characterised in that** between two rollers (48) which are rotatable about vertical axes, at least two rollers (46) are provided on the guide carriage (38) which are rotatably mounted around horizontal axes.

3. The mobile enclosed space as claimed in claim 1 or 2, **characterised in that** the running rail (41, 43) is formed in one piece as a profile rail or is formed as a multi-part construction composed of the guide portions (49, 52).

4. The mobile enclosed space as claimed in any of the preceding claims, **characterised in that** the running rail (41) is provided laterally adjoining the floor plate (27) of the base module (22) and **in that** the running rail (43) is provided frontally adjoining the hinge wall (16), with at least one guide portion (49, 52) being provided flush, or recessed, with respect to the top surface of the floor plate (27) of the base module (22) and with respect to the top surface of the hinge wall (16).

5. The mobile enclosed space as claimed in any of the preceding claims, **characterised in that** the distance between a frontal end of the running rail (41) on the floor plate (27) and the opposing frontal end of the running rail (43) on the hinge wall (16) is smaller than a distance between two rollers (46) on the guide carriage (38) that have horizontally oriented axes.

6. The mobile enclosed space as claimed in any of the preceding claims, **characterised in that** the guide carriage (38) has a main body (39) including a profile element folded over several times, wherein a fastening portion (45) to be attached to the expansion space element (21) or to the base module (22) is within a vertical axis that lies within the running face of the rollers (46) having horizontal axes.

7. The mobile enclosed space as claimed in any of the preceding claims, **characterised in that** an outer side of the frontal side wall (28, 29) of the expansion space element (21) has a cover plate (33) provided thereon which extends at least along the first and second guide portions (49, 52) of the running rail (41) of the floor plate (27), and the outer side of the hinge wall (16) has a cover plate (34) provided thereon which is disposed at a distance from the guide rail (43) of the hinge wall (16), such that the cover plate (33) of the expansion space element (21) is positioned between the cover plate (34) and the running rail (43) of the hinge wall (16).

8. The mobile enclosed space as claimed in any of the preceding claims, **characterised in that** on an outer surface of the frontal side wall (28, 29) of the base module (22), preferably near, or adjacent to, a corner region between the side wall (28, 29) and the roof (30), a sliding rail (54) is provided that supports at least one sliding member (56) provided on an inner surface of the frontal side wall (24, 25) of the expansion space element (21) or of a frame of the expansion space element (21).

9. The mobile enclosed space as claimed in claim 8, **characterised in that** the sliding member (56) is formed of plastic material.

10. The mobile enclosed space as claimed in any one of claims 8 or 9, **characterised in that** the expansion space element (21) is displaceably guided with respect to the base module (22) by means of at least two guide carriages (38) included in the expansion space element (21) which are preferably fastened onto each side wall (24, 25) of the expansion space element (21), and by means of at least one sliding member (56) arranged between the side wall (24, 25) of the expansion space element (21) and the side wall (28, 29) of the base module (22).

11. The mobile enclosed space as claimed in any of the preceding claims, **characterised in that** the expansion space element (21) has a flexible sealing member (59) provided at least section-wise on its bottom surface and facing towards the floor plate (27) or the expansion floor plate (18) and which is supported by said floor plate (28) or said expansion floor plate (21).

12. The mobile enclosed space as claimed in claim 11, **characterised in that** said at least one flexible sealing member (59), which is preferably realised as a sealing lip or a brush strip, is formed on a bottom surface of the side walls (24, 25, 26) or on a strip (59) terminating the bottom surface of the side walls (24, 25, 26).

## Revendications

1. Espace clos mobile (11), de préférence une caravane, une remorque de vente et/ou d'exposition, un camping-car ou un conteneur,
- avec un module de base (22) qui définit un espace de base, le module de base (22) comprenant une plaque de fond (27), des parois latérales frontales (28, 29) et un toit (30),
- avec au moins une paroi rabattable (16), affectée à l'espace clos mobile (11), qui comprend une plaque de fond supplémentaire (18) et qui peut être rabattue, et
- avec au moins un élément d'espace supplémentaire (21) qui comprend un toit (30), des parois latérales frontales (28, 29) et un côté longitudinal (31) et qui, dans une position d'utilisation (19), forme avec la paroi rabattable (16) une fois rabattue un espace supplémentaire qui agrandit l'espace de base,
- un guide (37) constitué de galets de roulement (46) et de rails de roulement (41) étant prévu entre l'élément d'espace supplémentaire (21) et la paroi rabattable (16) en vue de faire glisser l'élément d'espace supplémentaire (21) sur la paroi rabattable (16) alors que celle-ci se trouve dans la position rabattue,
- le guide (37) présentant au moins un chariot de guidage (38) pourvu de galets de roulement (46, 48), et
- le guide (37) comprenant des rails de roulement (41, 43) qui présentent une première partie de guidage (49) sur laquelle peuvent rouler les galets de roulement (46) pourvus d'un axe horizontal et une deuxième partie de guidage (52) le long de laquelle sont guidés des galets de roulement (48) pourvus d'un axe vertical, et le mouvement de déplacement dudit au moins un chariot de guidage (38) étant orienté par rapport à la première partie de guidage (49),
**caractérisé en ce que**
- le chariot de guidage (38) présente un corps de base (39) sur lequel est prévue une partie de fixation (45) qui se termine par un profil en forme de U, et
- sur le corps de base (39) sont logés, à l'opposé de la partie de fixation, au moins deux galets de roulement (46) de manière à pouvoir tourner autour d'un axe horizontal et qu'au moins deux galets de roulement (48) sont logés sur des pattes de fixation (47) du corps de base (39) de manière à pouvoir tourner autour d'un axe vertical.

2. Espace clos mobile selon la revendication 1, **caractérisé en ce qu'**au moins deux galets de roulement (46) qui sont logés de manière à pouvoir tourner autour de l'axe horizontal sont prévus sur le chariot de guidage (38), entre deux galets de roulement (48) qui peuvent tourner autour de l'axe vertical.

3. Espace clos mobile selon la revendication 1 ou 2, **caractérisé en ce que** le rail de roulement (41, 43) est réalisé en une seule pièce en tant que rail profilé ou est constitué en plusieurs pièces par les parties de guidage (49, 52).

4. Espace clos mobile selon l'une quelconque des revendications précédentes, **caractérisé en ce que** le rail de roulement (41) est prévu de manière à se raccorder latéralement à la plaque de fond (27) du module de base (22) et **en ce que** le rail de roulement (43) est prévu de manière à se raccorder frontalement à la paroi rabattable (16), au moins une partie de guidage (49, 52) étant prévue de manière à être au même niveau ou à un niveau surbaissé par rapport à la face supérieure de la plaque de fond (27) du module de base (22) et à la face supérieure de la paroi rabattable (16).

5. Espace clos mobile selon l'une quelconque des revendications précédentes, **caractérisé en ce que** la distance entre une extrémité frontale du rail de roulement (41) prévu sur la plaque de fond (27) et l'extrémité frontale opposée du rail de roulement (43) prévu sur la paroi rabattable (16) est inférieure à une distance entre deux galets de roulement (46) à axe horizontal prévus sur le chariot de guidage (38).

6. Espace clos mobile selon l'une quelconque des revendications précédentes, **caractérisé en ce que** le chariot de guidage (38) présente un corps de base (39) constitué d'un élément profilé à plusieurs plis, une partie de fixation (45) destinée à être raccordée à l'élément d'espace supplémentaire (21) ou au module de base (22) étant située dans un axe vertical qui se situe à l'intérieur de la surface de roulement des galets de roulement (46) à axe horizontal.

7. Espace clos mobile selon l'une quelconque des revendications précédentes, **caractérisé en ce que** sur une face extérieure de la paroi latérale frontale (28, 29) de l'élément d'espace supplémentaire (21) est prévu un panneau (33) qui s'étend au moins le long de la première et de la deuxième partie de guidage (49, 52) du rail de roulement (41) de la plaque de fond (27) et **en ce que** sur une face extérieure de la paroi rabattable (16) est prévu un panneau (34) qui est disposé à une distance telle du rail de guidage (43) de la paroi rabattable (16) que le panneau (33) de l'élément d'espace supplémentaire (21) est positionné entre le panneau (34) et le rail de roulement (43) de la paroi rabattable (16).

8. Espace clos mobile selon l'une quelconque des revendications précédentes, **caractérisé en ce que** sur la face extérieure de la paroi latérale frontale (28, 29) du module de base (22), de préférence à proximité d'une zone d'angle entre la paroi latérale (28, 29) et le toit (30) ou de manière contiguë à celle-ci, est prévue une glissière (54) sur laquelle s'appuie au moins un élément de glissement (56) qui est prévu sur une face intérieure de la paroi latérale frontale (24, 25) de l'élément d'espace supplémentaire (21) ou d'un cadre dudit élément d'espace supplémentaire (21) .

9. Espace clos mobile selon la revendication 8, **caractérisé en ce que** l'élément de glissement (56) est réalisé en matière plastique.

10. Espace clos mobile selon l'une quelconque des revendications 8 ou 9, **caractérisé en ce que** l'élément d'espace supplémentaire (21) est guidé de manière à pouvoir se déplacer par rapport au module de base (22) grâce à au moins deux chariots de guidage (38) insérés sur l'élément d'espace supplémentaire (21) et fixés de préférence à chaque paroi latérale (24, 25) de l'élément d'espace supplémentaire (21) ainsi que grâce à au moins un élément de glissement (56) disposé entre la paroi latérale (24, 25) de l'élément d'espace supplémentaire (21) et la paroi latérale (28, 29) du module de base (22).

11. Espace clos mobile selon l'une quelconque des revendications précédentes, **caractérisé en ce que** l'élément d'espace supplémentaire (21) présente sur une face inférieure, au moins par sections, un élément d'étanchéité flexible (59) qui est tourné vers la plaque de fond (27) ou vers la plaque de fond supplémentaire (18) et qui repose sur ladite plaque de fond (28) ou sur ladite plaque de fond supplémentaire (21).

12. Espace clos mobile selon la revendication 11, **caractérisé en ce que** ledit au moins un élément d'étanchéité flexible (59) qui est réalisé de préférence en tant que lèvre d'étanchéité ou en tant que joint balai peut être fixé sur une face inférieure des parois latérales (24, 25, 26) ou sur une baguette servant de finition à la face inférieure des parois latérales (24, 25, 26).
